# EUROPÄISCHE PATENTSCHRIFT

(11) **EP 0 579 980 B1**
(45) Veröffentlichungstag und Bekanntmachung des Hinweises auf die Patenterteilung: **09.11.2005**
(21) Anmeldenummer: 93110320.4
(22) Anmeldetag: 29.06.1993
(51) Int. Cl.: H04L 12/42, H04Q 11/04

(54) **ATM-Kommunikationssystem**
ATM communication system
Système de communication à ATM

(30) Priorität: 20.07.1992 DE 4223860
(43) Veröffentlichungstag der Anmeldung: 26.01.1994
(73) Patentinhaber: SIEMENS AKTIENGESELLSCHAFT, 80333 München (DE)
(72) Erfinder: Niestegge, Gerhard, Dr. rer. nat., D-8000 München 70 (DE); Tegtmeyer, Volker, Dipl.-Ing., D-81545 München (DE); Wolf, Hartmut, Dipl.-Ing., D-8123 Peissenberg (DE)

(56) Entgegenhaltungen:
- FUJITSU-SCIENTIFIC AND TECHNICAL JOURNAL, Bd. 28, Nr. 2, 1.Januar 1992, Seiten 206-215, XP000312061 SATOSHI NOJIMA ET AL: "LOCAL AREA NETWORK SYSTEMS"
- IEEE TRANSACTIONS ON COMMUNICATIONS, Bd. 38, Nr. 4, 1.April 1990, Seiten 539-545, XP000136594 MOE RAHNEMA: "THE FAST PACKET RING SWITCH: A HIGH-PERFORMANCE EFFICIENT ARCHITECTURE WITH MULTICAST CAPABILITY"

## Beschreibung

Die Erfindung betrifft ein Kommunikationssystem gemäß Oberbegriff des Patentanspruches 1.

In nach einem asynchronen Übertragungsverfahren (ATM-"asynchronous transfer mode") arbeitenden Kommunikationssystemen ist bisher vorgesehen, daß entweder der durch Nachrichtenzellenströme einer Mehrzahl von Teilnehmereinrichtungen gegebene Nachrichtenzellenverkehr durch wenige große, zentrale Konzentratoren konzentriert wird, wodurch lange, schlecht ausgenutzte Anschlußleitungen zwischen den Teilnehmereinrichtungen und dem jeweiligen Konzentrator entstehen können, oder daß mehrere Konzentratoren in näherer Entfernung zu den Teilnehmereinrichtungen eingesetzt werden, die aufgrund weniger angeschlossener Teilnehmereinrichtungen nur eine schlechte Konzentration erreichen können.

Eine derartige Anordnung ist bereits aus dem Artikel "Local Area Network Systems" Fujitsu-Scientific and Technical Journal, Bd. 28, Nr. 2, 1. Januar 1992, Seiten 206-215 von S. Nojima et al. bekannt.

Eine weitere Möglichkeit besteht in dem Einsatz von ATM-Konzentratoren und ATM-Multiplexern mit add/drop-Funktionalität in einer Stern-oder Ringtopologie, welche den durch unterschiedliche Nachrichtenzellenströme gegebenen Nachrichtenzellenverkehr auf verschiedene Bündel oder virtuelle Pfade mit festen Bandbreiten konzentrieren bzw. multiplexen. Dadurch entstehen viele kleine Bündel bzw. Pfade, die bei gleicher Blockierungswahrscheinlichkeit schlechter ausgelastet sind als große Bündel bzw. Pfade. Eine Anordnung von Konzentratoren in einer Ringtopologie eines Kommunikationssystems ist bereits bekannt ("Communication switching systems", Murry Rubin und C.E.Haller, Reinhold publishing corporation, New York, 1966, Seiten 218 und 219). Bei dieser bekannten Anordnung sind zwei gesonderte, über einen zentralen Prozessor miteinander verbundene Ringleitungssysteme vorgesehen, in welche jeweils eine Mehrzahl von Konzentratoren eingefügt ist. An die einzelnen Konzentratoren ist jeweils eine Mehrzahl von Teilnehmereinrichtungen angeschlossen. Dabei erfolgt eine Nachrichtenübertragung zwischen den Teilnehmereinrichtungen und dem zentralen Prozessor nach einem Abfrage-/Antwortprinzip, wobei die Nachrichtensignale in einem freien Fluß auf einer wahlfreien Basis ohne Überwachung durch den zentralen Prozessor übertragen werden. Darüber hinaus ist ausgeführt, daß aufgrund von Störungen Überlagerungen von Nachrichtensignalen durch in den Konzentratoren jeweils vorhandene Schalt- und Speichermittel zu verhindern ist.

Es ist nun Aufgabe der vorliegenden Erfindung, einen Weg zu zeigen, wie bei einem Kommunikationssystem der eingangs genannten Art eine hohe Konzentration des Nachrichtenzellenverkehrs unter Vermeidung der genannten Nachteile erreicht werden kann.

Gelöst wird diese Aufgabe bei einem Kommunikationssystem der eingangs genannten Art durch die im Patentanspruch 1 angegebenen Merkmale.

Die Erfindung bringt dabei den Vorteil mit sich, daß der Aufbau von virtuellen Verbindungen über die einzelnen virtuellen Pfade des Ringleitungssystems von zentraler Stelle aus gesteuert wird, so daß eine vollständige gemeinsame Nutzung der Übertragungskapazität in dem Ringleitungssystem durch die einzelnen virtuellen Verbindungen stattfindet und somit die verteilte Konzentratoranordnung nach außen hin wie ein einziger großer Konzentrator wirkt. Damit verbunden ist eine hohe Verkehrskonzentration der von den Teilnehmereinrichtungen her übertragenen Nachrichtenzellen. Gleichzeitig werden schlecht ausgelastete, lange Anschlußleitungen zwischen Teilnehmereinrichtungen und einem ersten Konzentrator vermieden. Der Netzbereich mit dem konzentrierten Nachrichtenzellenverkehr verschiebt sich näher an die Teilnehmereinrichtungen heran, so daß die Leitungskosten, welche in ATM-Kommunikationssystem besonders signifikant im Teilnehmeranschlußbereich sind, erheblich reduziert werden können.

Vorteilhafte Ausgestaltungen der Erfindung ergeben sich aus den Patentansprüchen 2 und 3.

Im folgenden wird nun die vorliegende Erfindung anhand einer Zeichnung beispielsweise näher erläutert.

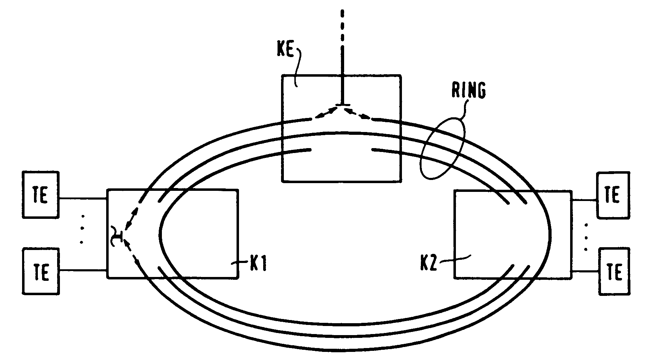

In der Zeichnung ist schematisch eine Kommunikationseinrichtung KE dargestellt, welche zu einem nach einem asynchronen Übertragungsprinzip (ATM "asynchronous transfer mode") arbeitenden ATM-Kommunikationssystem gehört und beispielsweise mit weiteren, in der Zeichnung nicht dargestellten Kommunikationseinrichtungen dieses ATM-Kommunikationssystems in Verbindung steht. Diese Kommunikationseinrichtung KE, bei der es sich beispielsweise um eine ATM-Vermittlungseinrichtung handeln möge, ist zusammen mit einer Mehrzahl von Konzentratoren in ein Ringleitungssystem RING eingefügt. Lediglich als Beispiel wird dabei von zwei derartigen, mit K1 und K2 bezeichneten Konzentratoren ausgegangen. An jedem dieser Konzentratoren ist dabei eine Mehrzahl von Teilnehmereinrichtungen TE bzw. eine Mehrzahl von mit Teilnehmeranschlußleitungen verbundenen Einrichtungen angeschlossen.

Innerhalb des Ringleitungssystems RING ist einerseits zwischen der Kommunikationseinrichtung KE und dem jeweiligen Konzentrator (K1 und K2) und andererseits zwischen den einzelnen Konzentratoren jeweils ein virtueller Pfad zumindest semi-permanent eingerichtet, über welchen eine Mehrzahl von virtuellen Verbindungen verlaufen kann. Darüber hinaus ist zu jedem dieser Pfade ein virtueller Ersatz-Pfad eingerichtet, der in der entgegengesetzten Richtung verläuft und bei Ausfall des regulären virtuellen Pfades benutzt ist. In der Zeichnung sind die einzelnen virtuellen Pfade und Ersatz-Pfade durch in dem Ringleitungssystem RING eingezeichnete Ringsegmente schematisch dargestellt, die jeweils die Kommunikationseinrichtung KE und einen der Konzentratoren K1 und K2 bzw. die beiden Konzentratoren miteinander verbinden. Am Beispiel der Kommunikationseinrichtung KE und des Konzentrators K1 ist außerdem der Verlauf des jeweiligen regulären und des zugehörigen Ersatz-Pfades angedeutet, und zwar der reguläre Pfad durch in der Kommunikationseinrichtung KE bzw. in dem Konzentrator K1 mit einer ausgezogenen Linie verbundene Richtungspfeile, der zugehörige Ersatz-Pfad dagegen durch mit einer unterbrochenen Linie verbundene Richtungspfeile.

Innerhalb der virtuellen Pfade erfolgt für die darin verlaufenden virtuellen Verbindungen keine feste Zuordnung einer Übertragungskapazität, sondern diese wird von der Kommunikationseinrichtung KE her für die einzelnen virtuellen Verbindungen nach Maßgabe der im Zuge des jeweiligen Verbindungsaufbaus angeforderten Übertragungskapazität dynamisch reserviert. Hierfür werden in der Kommunikationseinrichtung KE individuell für die einzelnen virtuellen Pfade Angaben bezüglich der durch bereits eingerichtete virtuelle Verbindungen bereits in Anspruch genommenen Übertragungskapazität geführt. Diese Angaben werden mit jedem Aufbau und Abbau einer virtuellen Verbindung, welche stets unter der Steuerung der Kommunikationseinrichtung KE abgewickelt wird, aktualisiert.

Für den Aufbau einer virtuellen Verbindung von einer der in der Zeichnung dargestellten Teilnehmereinrichtungen TE (rufende Teilnehmereinrichtung) her wird, wie bereits vorstehend erwähnt, eine bestimmte Übertragungskapazität angefordert. Hierfür übermittelt die jeweilige Teilnehmereinrichtung in im Zuge des Verbindungsaufbaus übertragenen Signalisierungszellen charakteristische Parameter, durch die die jeweilige Übertragungskapazität bestimmt ist. Dabei kann es sich bei diesen charakteristischen Parametern beispielsweise um Angaben bezüglich einer Spitzenbitrate und/oder mittleren Bitrate handeln.

Anhand der im Zuge des jeweiligen Verbindungsaufbaues von einer rufenden Teilnehmereinrichtung TE her übertragenen Signalisierungszellen ermittelt die Kommunikationseinrichtung KE den für diese virtuelle Verbindung in Frage kommenden virtuellen Pfad und überprüft anhand der für den betreffenden virtuellen Pfad geführten Kapazitätsangaben, ob für die gerade einzurichtende virtuelle Verbindung noch eine ausreichende Übertragungskapazität zur Verfügung steht. Ist dies der Fall, so wird diese virtuelle Verbindung eingerichtet und für die gesamte Verbindungsdauer eine entsprechende Übertragungskapazität reserviert. Anderenfalls wird die gerade gewünschte virtuelle Verbindung zurückgewiesen.

Bei einer bestehenden virtuellen Verbindung wird ausschließlich in demjenigen Konzentrator (K1, K2), der mit der für diese virtuelle Verbindung in Frage kommenden rufenden Teilnehmereinrichtung verbunden ist, die Einhaltung der oben erwähnten charakteristischen Parameter überwacht, so daß die Kommunikationseinrichtung KE von derartigen Überwachungsfunktionen entlastet ist. Für diese verbindungsindividuellen Überwachungen können in den Konzentratoren bekannte Überwachungseinrichtungen vorgesehen sein. Als Beispiel seien hier sogenannte "Leaky-Bucket"-Zähler genannt.

## Patentansprüche

1. Kommunikationssystem für die Übertragung von Nachrichtenzellen nach einem asynchronen Transfermodus im Zuge von virtuellen Verbindungen mit untereinander verbundenen ATM-Kommunikationseinrichtungen sowie mit an wenigstens eine der Kommunikationseinrichtungen (KE) angeschlossen Konzentratoreinrichtungen (K1, K2), an welche jeweils eine Mehrzahl von ATM-Teilnehmereinrichtungen (TE) angeschlossen ist,
**dadurch gekennzeichnet,**
**daß** die Konzentratoreinrichtungen (K1, K2) zusammen mit der zugehörigen Kommunikationseinrichtung (KE) in einem Ringleitungssystem (RING) angeordnet sind,
**daß** innerhalb des Ringleitungssystems jede der Konzentratoreinrichtungen einerseits mit der betreffenden Kommunikationseinrichtung (KE) und andererseits mit jeder der übrigen Konzentratoreinrichtungen über einen gesonderten virtuellen Pfad verbunden ist,
**daß** in der betreffenden Kommunikationseinrichtung (KE) individuell für die einzelnen virtuellen Pfade nach Maßgabe des momentanen Verkehrsaufkommens sich dynamisch ändernde Angaben bezüglich der Übertragungskapazität des jeweiligen virtuellen Pfades, welche bereits durch eingerichtete virtuelle Verbindungen belegt ist, geführt werden,
**daß** die Angaben bezüglich der bereits belegten Übertragungskapazität innerhalb der einzelnen virtuellen Pfade mit jedem Aufbau und Abbau einer virtuellen Verbindung aktualisiert werden,
und **daß** der Aufbau von virtuellen Verbindungen innerhalb der virtuellen Pfade derart durch die betreffende Kommunikationseinrichtung (KE) zentral gesteuert wird, daß bei Vorliegen eines Wunsches für eine virtuelle Verbindung zunächst der für die betreffende virtuelle Verbindung in Frage kommende virtuelle Pfad ermittelt und dieser lediglich dann für die betreffende virtuelle Verbindung freigegeben wird, wenn eine dafür geforderte Übertragungskapazität noch zur Verfügung steht.

2. Kommunikationssystem nach Anspruch 1
**dadurch gekennzeichnet,**
**daß** von der jeweiligen Teilnehmereinrichtung (TE) her im Zuge des Aufbaus einer virtuellen Verbindung die dafür geforderte Übertragungskapazität bestimmende charakteristische Parameter vorgegeben werden und daß eine Überwachung auf die Einhaltung derartiger charakteristischer Parameter während des Bestehens der jeweiligen virtuellen Verbindung ausschließlich in derjenigen Konzentratoreinrichtung (K1 bzw. K2) durchgeführt wird, welche mit der die jeweilige virtuelle Verbindung ursprünglich wünschenden Teilnehmereinrichtung verbunden ist.

3. Kommunikationseinrichtung nach Anspruch 1 oder 2,
**dadurch gekennzeichnet,**
**daß** innerhalb des Ringleitungssystems (RING) jedem der virtuellen Pfade ein Ersatz-Pfad in der Gegenrichtung zugeordnet ist.

## Claims

1. Communication system for the transmission of message cells according to an asynchronous transfer mode in the course of virtual connections with ATM communication devices connected to one another, and with concentrator devices (K1, K2) connected to at least one of the communication devices (KE), to which a plurality of ATM subscriber devices (TE) are connected in each instance,
**characterised in that**
the concentrator devices (K1, K2) are arranged in a loop wiring system (RING) together with the associated communication device (KE), that within the loop wiring system each of the concentrator devices is connected on the one hand to the relevant communication device (KE) and on the other hand to each of the remaining concentrator devices by means of a separate virtual path,
that in the relevant communication device (KE) dynamically changing entries in relation to the transmission capacity of the virtual path are supplied individually for the individual virtual paths according to the current requirement of the volume of traffic, said virtual path being already occupied by set-up virtual connections, that the entries relating to the already occupied transmission capacity within the individual virtual paths are updated each time a virtual connection is set up and cleared, and that the set-up of virtual connections within the virtual paths is centrally controlled by means of the relevant communication device (KE) such that if a virtual connection is desired, the virtual path considered for the relevant virtual connection is first determined and this is only then approved for the relevant virtual connection, if a transmission capacity required therefore is still available.

2. Communication system according to claim 1
**characterised in that**
characteristic parameters determining the transmission capacity required therefor are predetermined from the respective subscriber device (TE) in the course of the set-up of a virtual connection
and that a monitoring of the compliance with characteristic parameters of this type is carried out during the existence of the respective virtual connection exclusively in the concentrator device (K1 and/or K2) which is connected to the subscriber device originally desiring the respective virtual connection.

3. Communication device according to claim 1 or 2, **characterised in that**, within the loop wiring system (RING), an alternate path in the opposite direction is assigned to each of the virtual paths.

## Revendications

1. Système de communication pour la transmission de cellules de messages selon un mode de transfert asynchrone dans la foulée de connexions virtuelles avec des dispositifs de communication ATM reliés entre eux ainsi qu'avec des dispositifs concentrateurs (K1, K2) raccordés à au moins un des dispositifs de communication (KE) et auxquels est respectivement raccordée une pluralité de dispositifs d'abonnés ATM (TE),
**caractérisé**
**en ce que** les dispositifs concentrateurs (K1, K2) sont disposés dans un système de lignes en anneau (RING) conjointement avec le dispositif de communication (KE) associé,
**en ce que**, à l'intérieur du système de lignes en anneau, chacun des dispositifs concentrateurs est relié, d'une part, au dispositif de communication (KE) concerné et, d'autre part, à chacun des autres dispositifs concentrateurs par l'intermédiaire d'un chemin virtuel séparé,
**en ce que** sont tenues, dans le dispositif de communication (KE) concerné, individuellement pour les chemins virtuels individuels et conformément à la densité momentanée du trafic, des indications qui se modifient dynamiquement, relatives à la capacité de transmission du chemin virtuel respectif, laquelle est déjà occupée par des connexions virtuelles mises en place,
**en ce que** les indications relatives à la capacité de transmission déjà occupée sont actualisées à l'intérieur des chemins virtuels individuels à chaque établissement et fermeture d'une connexion virtuelle
et **en ce que** l'établissement de connexions virtuelles à l'intérieur des chemins virtuels est commandé centralement par le dispositif de communication concerné (KE) de manière telle que, en présence d'une demande de connexion virtuelle, tout d'abord, il est procédé à la détermination du chemin virtuel entrant en ligne de compte pour la connexion virtuelle concernée et que celui-ci est alors seulement libéré pour la connexion virtuelle concernée lorsqu'une capacité de transmission exigée à cet effet est encore disponible.

2. Système de communication selon la revendication 1,
**caractérisé**
**en ce que**, à partir du dispositif d'abonné (TE) respectif, dans la foulée de l'établissement d'une connexion virtuelle, il est procédé à la prédéfinition de paramètres caractéristiques déterminant la capacité de transmission exigée à cet effet
et **en ce qu'**une surveillance du respect de tels paramètres caractéristiques, pendant l'existence de la connexion virtuelle respective, est effectuée exclusivement dans le dispositif concentrateur (K1 resp. K2) qui est relié au dispositif d'abonné souhaitant, à l'origine, la connexion virtuelle respective.

3. Système de communication selon la revendication 1 ou 2,
**caractérisé**
**en ce qu'**est affecté, à chacun des chemins virtuels, à l'intérieur du système de lignes en anneau (RING), un chemin de remplacement dans le sens inverse.
